# EUROPEAN PATENT APPLICATION

(11) **EP 2 940 577 A1**
(43) Date of publication of application: **04.11.2015**
(21) Application number: 14368020.5
(22) Date of filing: 30.04.2014
(51) Int. Cl.: G06F 9/32, G06F 9/30, G06F 9/26

(54) **Patching of program code executed from one time programmable memory**

(71) Applicant: Dialog Semiconductor GmbH, 73230 Kirchheim/Teck-Nabern (DE)
(72) Inventor: Todd, Philip, Corsham Wiltshire SN13 8QP (GB)
(74) Representative: Schuffenecker, Thierry

(57) **Abstract**

Patching of program code stored in and directly executed from an OTP is supported by a patch mechanism that does not rely on additional hardware, external intervention or RAM. The features of the disclosure include using a patch daisy chain, delay considerations, non-destructive patching and nested subroutine calls. The techniques disclosed are equally applicable for OTP with an unprogrammed value of "1" as for unprogrammed values of "0".

## Description

### Technical Field

The present document relates patching of program code. In particular, the present document relates a mechanism to support patching of program code executed from a one Time Programmable (OTP) memory.

### Background Art

The availability of high density OTP (One Time Programmable) memory macros creates a lower cost non-volatile program storage option for ICs with embedded processors (fewer mask layers are required than EEPROMs for example).

As its name suggests, OTP memory does not support (full) reprogramming of memory locations - either because of the use of an anti-fuse cell design or because (for floating gate designs) erasing requires exposure to UV light which is not typically possible once the device has been packaged. OTP memory has therefore been typically treated in the same way as read only memory (ROM) from the point of view of code storage, with the entire code footprint copied into shadow random access memory (RAM) before execution start. A patch table is then used to overlay code that needs to be updated.

### Area and power consumption considerations

Copying the OTP memory contents into RAM prior to enabling the processor requires not only a shadow RAM but also a boot loader to carry out the initial copy and then to overlay the patches. While the relatively higher current consumption of OTP read cycles compared to RAM may make this approach preferable it is not the case in all application areas. In particular where the processor is active for a small percentage of the time, the average current consumption difference is reduced and the area cost of silicon may become the dominant factor when deciding on the memory architecture. Some means of patching program code when executed from OTP memory is required.

A disadvantage of prior art is that it relies on additional hardware, external intervention or RAM. It would be desirable to use a mechanism to support patching of program code stored in and directly executed from OTP.

### Summary of the invention

An object of the present disclosure is to create program code in an OTP memory using a processor instruction set that includes an 'all zeroes' or equivalent 'benign' operation code (opcode).

A further object of the present disclosure is to create program code in an OTP memory using a processor instruction set that includes a benign opcode that can be created by setting one or more bits of an existing opcode in a program to 0 or 1.

A further object of the present disclosure is to achieve the ability to set the OTP memory programming voltage and enable the programming mode of a packaged device.

A further object of the present disclosure is to achieve a mechanism to support patching of program code stored in and directly executed from OTP.

A further object of the present disclosure is to achieve a patch mechanism that does not rely on additional hardware, external intervention or RAM.

In accordance with the objects of this disclosure a method to support patching of program code executed from OTP memory at a subroutine level has been achieved. The method disclosed comprises the steps of: (1) providing an one-time programmable (OTP) memory and a means to convert bits of the OTP memory, wherein one or more hooks comprising jump instructions are inserted into an original code on the OTP memory such that subroutine calls can be made to a subroutine, (2) programming a new subroutine in the formerly unprogrammed OTP memory area; and (3) patching an existing hook jumping to a subroutine to be retired, wherein the modified hook is capable to jump to the new subroutine.

In accordance with the objects of this disclosure a method to support patching of program code executed from OTP memory at a subroutine level has been achieved. The method disclosed comprises the steps of: (1) providing an one-time programmable (OTP) memory and a means to convert bits of the OTP memory, wherein one or more hooks comprising jump instructions are inserted into an original code on the OTP memory such that subroutine calls can be made from the hook to a subroutine hook, wherein the hook comprises one or more instructions that jump to the subroutine, followed by a number of unprogrammed memory locations, (2) clearing the one or more existing jump instructions pointing to a subroutine to be retired, wherein the one or more jump instructions are replaced by some other benign instructions, (3) programming a new subroutine in the formerly unprogrammed OTP memory area, wherein the subroutine at the patch address begins itself with a hook header comprising one or more instructions that jump to the new subroutine, so that the new subroutine can be patched in turn thus enabling a further patch, and (4) programming new one or more jump instructions in formerly unprogrammed memory locations of the original hook, following the benign instructions of the previous step, wherein the new one or more jump instructions point to a patch address of a different subroutine in an unprogrammed OTP memory space.

### Description of the drawings

The invention is explained below in an exemplary manner with reference to the accompanying drawings, wherein
**Fig. 1** shows a patch mechanism for a subroutine call before and after view of an OTP memory map.
**Fig. 2** shows a before and after view of the memory map, when subroutine patching is reversed.
**Fig. 3** shows a memory map before and after patch nesting.
**Fig. 4** shows a flowchart of a method to support patching of program code executed from OTP memory at a subroutine level maintaining a daisy chain.
**Fig. 5** shows a more detailed flowchart of a method to support patching of program code executed from OTP memory at a subroutine level maintaining a daisy chain.

### Description of the preferred embodiments

Similar to other non-volatile memories (such as EEPROM), high density OTP memories usually have the same unprogrammed value of either '0' for all bits or '1' for all bits. The programming process is therefore the task of changing some of the bits to the opposite of the unprogrammed value. "One Time Programmable" in this respect means that any bit value may be inverted just once.

This disclosure takes advantage of the ability to program the OTP memory in several passes (patches), with each pass inverting more unprogrammed bits of the memory.

The following description and examples assume OTP with an unprogrammed value of '1' in all bits. This is for clarity only - the techniques are equally applicable for OTP with an unprogrammed value of '0' as well.

### Patch daisy chain

Code patching is done at the subroutine level. Hooks are inserted into the original code such that subroutine calls are made to the subroutine hook rather than directly to the subroutine start address itself. The hook contains one or more instructions that jump to the subroutine, followed by the same number of (or fewer or more) unprogrammed memory locations. The number of memory locations depends on the instruction set available and the position of the unprogrammed OTP space. As an example areas of unprogrammed OTP space may be always located within "short jump" range of a subroutine hook, whereas the subroutine hook itself might require a "long jump". The instruction set may require different numbers of instruction operation codes (opcodes) to implement "short jump" and "long jump".

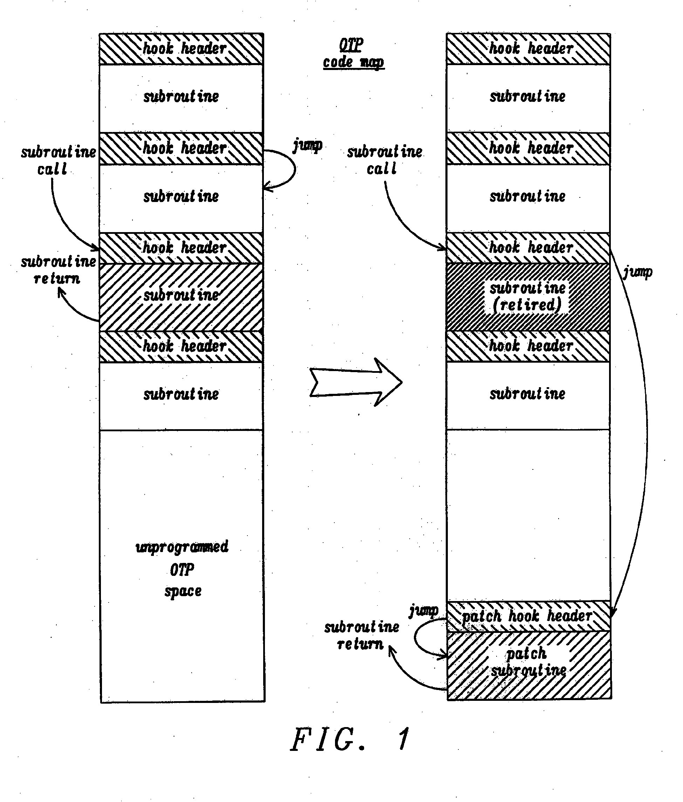

**Fig. 1** shows a patch mechanism for a subroutine call before and after view of an OTP memory map. **Fig. 1** shows that a hook header comprising a jump to the subroutine is attached to each subroutine and, after a patch, a jump instruction placed in the "old" hook header, points to a patch hook header in the formerly unprogrammed OTP area and the patch hook header points to a patch subroutine, wherein the subroutine, which has been used before the patch, is set inactive (retired).

Patching is carried out by changing the jump instruction(s) into some other 'benign' instruction(s), followed by a jump to a different subroutine address (the patch address). A benign instruction is defined as any instruction that does not modify the state of the processor, including register and flag values. Program execution continues with the next instruction after the benign instruction.

The unprogrammed locations for operation codes are available to program the new jump instruction. The processor should 'fall through' the modified codes to reach the new jump instruction.

The subroutine at the patch address should itself begin with a hook, so that it can in turn be patched.

Here is an example subroutine hook at address 0x8000 using an imaginary 16-bit instruction set:

| | | |
|---|---|---|
| 8000 | BCA5 LOAD AH | $FN_A_UPPER |
| 8002 | BD5A LOAD AL | $FN_A_LOWER |
| 8004 | 1600 JUMP A | |
| 8006 | FFFF | |
| 8008 | FFFF | |
| 800A | FFFF | |

The hook contains as an example 3 operation codes (opcodes) (jump to address 0xA55A) followed by 3 unprogrammed operation codes locations, wherein a first operation code loads the most significant part of an address into the most significant part of a register, a second operation code loads the least significant part of an address into the least significant part of said register, and the third operation code performs the jump to the address defined in the register. It should be noted that other numbers of the programmed operation codes and other numbers of the unprogrammed operation codes locations may be used.

It should be noted that in the above example register A is clobbered as part of the jump process. It may be preferable, if possible, to create the jump without affecting any registers or flags.

The instruction set in the following example has a "jump immediate" instruction that expects the full jump address to be contained in the next address location. In this case the jump address does not first need to be loaded into a register.

| | | |
|---|---|---|
| 8000 | BCDE JUMP_IMM | |
| 8002 | A55A | $FN_A |

The Opcode 0x0000 in our imaginary instruction set corresponds to the NOP (no operation) instruction. By programming all opcode bits to 0 an instruction can therefore always be changed to NOP, regardless of its previous value. The first step in applying a patch is to clear the existing jump instructions:

| | |
|---|---|
| 8000 | 0000 NOP |
| 8002 | 0000 NOP |
| 8004 | 0000 NOP |
| 8006 | FFFF |
| 8008 | FFFF |
| 800A | FFFF |

A call to address 0x8000 will now fall through the NOPs to reach address 0x8006, the start of the unprogrammed space. A new jump can be written into this space:

| | | |
|---|---|---|
| 8000 | 0000 NOP | |
| 8002 | 0000 NOP | |
| 8004 | 0000 NOP | |
| 8006 | BC90 LOAD AH | $HOOK_B_UPPER |
| 8008 | BD00 LOAD AL | $HOOK_B_LOWER |
| 800A | 1600 JUMP A | |

The hook has been modified to jump to address 0x9000, which itself is a hook that jumps to the new subroutine start address (in this example at address 0xB678):

| | | |
|---|---|---|
| 9000 | BCB6 LOAD AH | $FN_B_UPPER |
| 9002 | BD78 LOAD AL | $FN_B_LOWER |
| 9004 | 1600 JUMP A | |
| 9006 | FFFF | |
| 9008 | FFFF | |
| 900A | FFFF | |

Maintaining a daisy chain means that there is always the possibility to make a further patch, avoiding any 'dead ends'.

### Delay considerations

Every daisy chain step adds further delay before the subroutine begins. This should be considered as part of the patch preparation process.

Sometimes the jump code in the hook can be optimized to minimize the additional latency, for example:

| | | | | |
|---|---|---|---|---|
| 8000 | 70F2 ADD | A | PC | 2 |
| 8002 | 19F0 LDI | PC | A | |
| 8004 | A55A [$FN_A_ADDR] | | | |
| 8006 | FFFF | | | |
| 8008 | FFFF | | | |
| 800A | FFFF | | | |

The above optimization is only possible if the necessary instructions are available in the instruction set.

The above example adds 2 to the current program counter value (which will already be loaded with the next instruction address) and stores it in register A. The next instruction is an indirect load:
1) A ⇐ 0x8004
2) PC ⇐ 0xA55A ⇐ [0x8004] ⇔ [A]

The program counter is loaded with the value 0xA55A, which is equivalent to a jump to that address. The OTP space needed to store the instructions is the same as before, but this time the jump is achieved in only 2 instructions rather than 3. There are still 3 memory reads required so the end result will depend on the processor and bus interface architecture.

The number of memory locations required to describe the jump operation may be less than, the same as or more than the number of unprogrammed memory locations reserved for patching. In each case the number of memory locations may be less than 3, 3, or more than 3.

### Alternatives to the daisy chain

In latency critical applications, there may be ways to limit the length of the daisy-chain:
- Change the existing jump address value. Simply changing some bits of the address field to create a new address may be possible. The disadvantage of this approach is that there will be a limited number of unique addresses available, and they may not be in a convenient location in the memory map.
- Jump to RAM. The addition of an RAM "stub hook" could allow a limit to be placed on the length of a daisy chain. The final jump address in the chain would point to a patch in RAM. This hybrid approach may be beneficial in that the embedded RAM size might be smaller than a full shadow RAM implementation, but some way of initializing the RAM is now needed. This might be carried out by a patch copy function in the OTP that runs once during initialization (so no external host support or extra circuitry is required) and could itself have daisy-chain references, or by some other means.

### Alternatives to a NOP instruction

For some instruction sets the 'all zeroes' or 'all ones' opcode is not equivalent to a transparent NOP instruction. In these cases an alternative must be found.

If every hook consists of the same known opcode sequence, for example a register load followed by a jump, it may be possible to modify the opcodes so that the new opcodes have the equivalent function to a NOP. Careful opcode selection for the initial hook will be required to allow this to happen.

Suppose in our initial example that the all zeroes opcode is not a NOP, but a register move instruction can be created by changing some of the existing opcode bits to 0.

| | | |
|---|---|---|
| 8000 | BCA5 LOAD AH | $FN_A_UPPER |
| 8002 | BD5A LOAD AL | $FN_A_LOWER |
| 8004 | 1600 JUMP A | |
| 8006 | FFFF | |
| 8008 | FFFF | |
| 800A | FFFF | |

A register move to itself is effectively a NOP (as long as no flags are updated in the process). If the MOV, B, B instruction opcode is by chance 0x1400, then the modified hook could be:

| | | | |
|---|---|---|---|
| 8000 | 1400 MOV | B | B |
| 8002 | 1400 MOV | B | B |
| 8004 | 1400 MOV | B | B |
| 8006 | FFFF | | |
| 8008 | FFFF | | |
| 800A | FFFF | | |

### Non-destructive patching

With performing non-destructive patching, modifications are only made to the hook headers, not the subroutine bodies themselves. This means that a patch can be reversed at any time by branching back to the original subroutine body in the current hook.

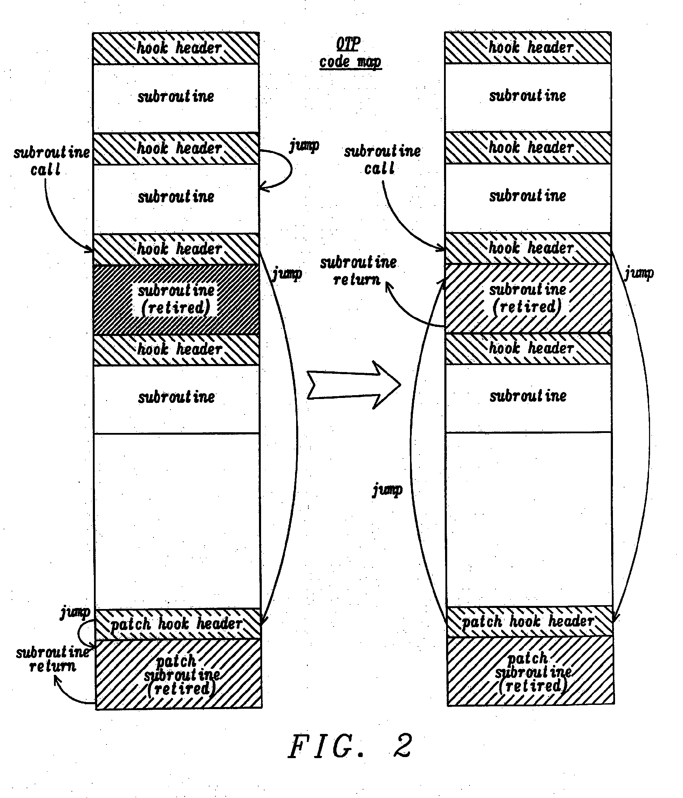

**Fig. 2** shows a before and after view of the memory map, when subroutine patching is reversed. Unless more space is left in the hook headers (or the existing addresses can be modified rather than cleared), this would mark the end of the daisy chain, all of the available hook opcodes now being taken.

Furthermore an additional subroutine can be inserted into a flow of subroutines by programming said additional subroutine in the unprogrammed OTP memory area and by patching the hook header of an original subroutine to jump to the additional subroutine, then by branching back from a hook of the additional subroutine to a body of said original subroutine.

### Nested subroutine calls

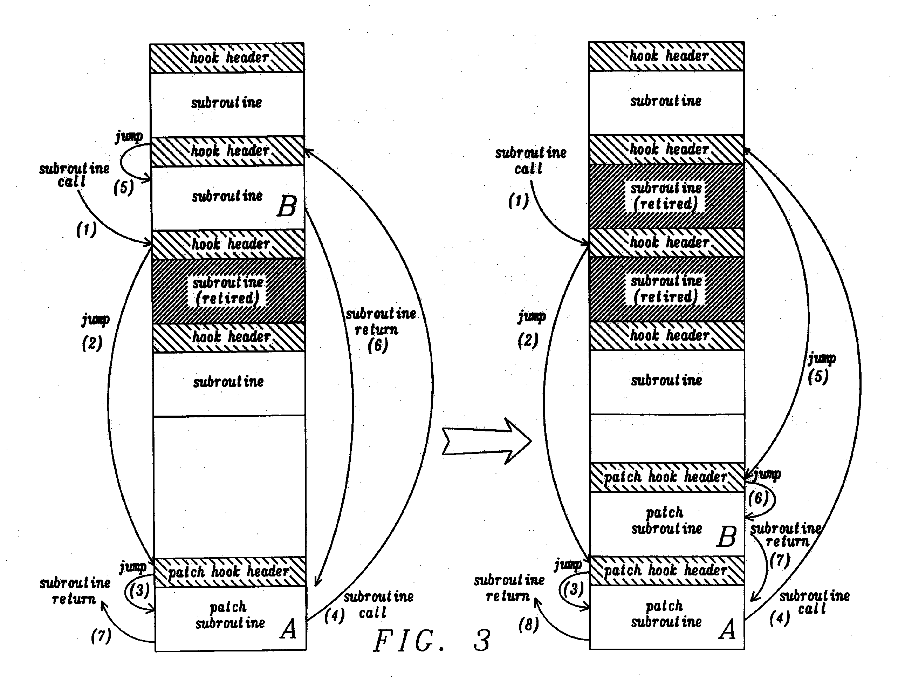

**Fig. 3** shows a memory map before and after patch nesting. A patch subroutine (A) may make a call to another subroutine (B) that has not yet been patched. Because the original hook entry point is the start of a daisy chain link to the patch area, any subsequent patches, for example a patch to subroutine (C), may be applied in the subroutine (B) hook without the need to make further patches to the calling subroutine (A).

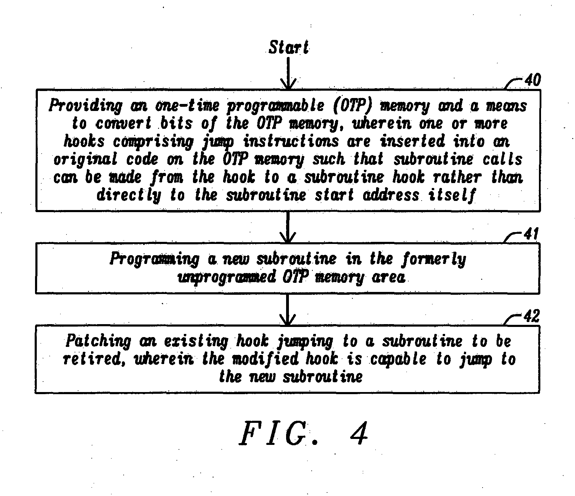

**Fig. 4** shows a flowchart of a method to support patching of program code executed from OTP memory at a subroutine level maintaining a daisy chain.

A first step **40** shows providing an one-time programmable (OTP) memory and a means to convert bits of the OTP memory, wherein one or more hooks comprising jump instructions are inserted into an original code on the OTP memory such that subroutine calls can be made from the hook to a subroutine hook rather than directly to the subroutine start address itself.

The next step **41** describes programming a new subroutine in the formerly unprogrammed OTP memory area, and the last step **42** illustrates patching an existing hook jumping to a subroutine to be retired, wherein the modified hook is capable to jump to the new subroutine.

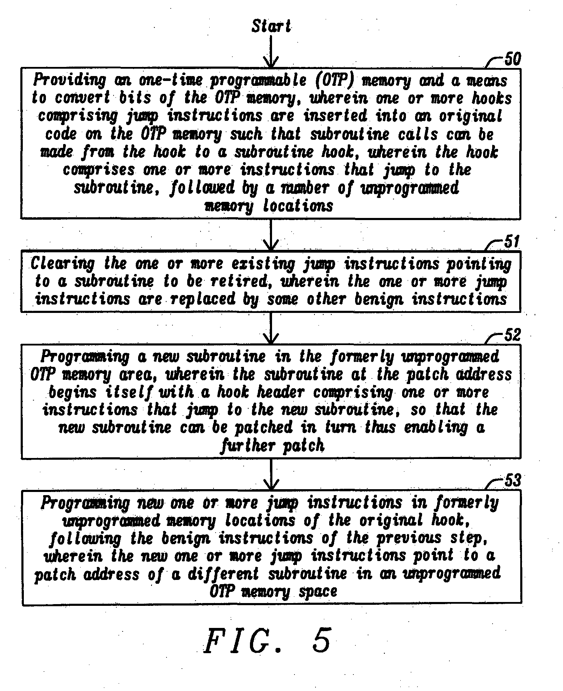

**Fig. 5** shows a more detailed flowchart of a method to support patching of program code executed from OTP memory at a subroutine level maintaining a daisy chain.

A first step **50** shows providing an one-time programmable (OTP) memory and a means to convert bits of the OTP memory, wherein one or more hooks comprising jump instructions are inserted into an original code on the OTP memory such that subroutine calls can be made from the hook to a subroutine hook rather than directly to the subroutine start address itself, wherein the hook comprises one or more instructions that jump to the subroutine, followed by a number of unprogrammed memory locations.

It should be noted that tools to convert bits of an OTP memory will be specific to the chip. One example requires a 7.5V programming voltage to be connected to a pin with the programming sequence controlled by writing to on-chip registers.

The following step **51** describes clearing the one or more existing jump instructions pointing to a subroutine to be retired, wherein the one or more jump instructions are replaced by some other benign instructions. Step **52** shows programming a new subroutine in the formerly unprogrammed OTP memory area, wherein the subroutine at the patch address begins itself with a hook header comprising one or more instructions that jump to the new subroutine, so that the new subroutine can be patched in turn thus enabling a further patch. Finally step **53** illustrates programming new one or more jump instructions in formerly unprogrammed memory locations of the original hook, following the benign instructions of the previous step, wherein the new one or more jump instructions point to a patch address of a different subroutine in an unprogrammed OTP memory space.

While the invention has been particularly shown and described with reference to the preferred embodiments thereof, it will be understood by those skilled in the art that various changes in form and details may be made without departing from the spirit and scope of the invention.

## Claims

1. A method to support patching of program code executed from OTP memory at a subroutine level, the method comprising the steps of:
(1) providing an one-time programmable (OTP) memory and a means to convert bits of the OTP memory, wherein one or more hooks comprising jump instructions are inserted into an original code on the OTP memory such that subroutine calls can be made from the hook to a subroutine hook rather than directly to the subroutine start address itself;
(2) programming a new subroutine in the formerly unprogrammed OTP memory area; and
(3) patching an existing hook jumping to a subroutine to be retired, wherein the modified hook is capable to jump to the new subroutine.

2. The method of claim 1, wherein the hook comprises one or more operation codes comprising a jump instruction followed by a number of unprogrammed operation code locations.

3. The method of claim 2, wherein the number of unprogrammed operation code locations depends on an instruction set available and a position of the unprogrammed OTP space

4. The method of claim 2, wherein a number of the operation codes is equal to a number of the unprogrammed operation code locations, or is greater than a number of the unprogrammed operation code locations, or is less than a number of the unprogrammed operation code locations.

5. The method of claim 2, wherein the hook comprises three operation codes, wherein a first operation code loads a high address into a register, a second operation code loads a low address into the register, and the third operation code performs the jump to the address defined in the register, wherein the three operation codes are followed by three unprogrammed values.

6. The method of claim 2, wherein the hook comprises a number of operation codes that together define the operation of a jump to an address, wherein the operation codes are followed by a number of unprogrammed values.

7. The method of claim 1, wherein subroutine calls are made to a subroutine hook, wherein the subroutine hook comprises a number of jump instructions that jump to the subroutine, followed by a number of unprogrammed memory locations, wherein the number of unprogrammed memory locations is the same as the number of jump instructions, or is different to the number of jump instructions.

8. The method of claim 1, wherein said modification of the existing hook comprises:
- changing one or more existing jump instructions of the hook pointing to a subroutine to be retired, wherein the one or more jump instructions are replaced by some other benign instructions; and
- programming one or more new jump instructions in formerly unprogrammed memory locations of the original hook, following the benign instructions of the previous step, wherein the new one or more jump instructions point to a patch address of a different subroutine in an unprogrammed OTP memory space.

9. The method of claim 1, wherein, if an all zero operation code of an instruction set used corresponds to a no operation (NOP) instruction, the existing jump instruction is cleared by setting all operation code bits to zero or wherein, if an all ones operation code of an instruction set used corresponds to a no operation (NOP) instruction, the existing jump instruction is cleared by setting all operation code bits to one.

10. The method of claim 1, wherein, if every hook consists of a same operation code sequence, the operation codes are modified so that the new operation codes have an equivalent function to a NOP.

11. The method of claim 1, wherein the new subroutine in the formerly unprogrammed OTP memory area begins itself with a hook header comprising one or more instructions that are capable to jump to a potential further new subroutine, so that the new subroutine can be patched in turn thus enabling a further potential new subroutine in a daisy chain.

12. The method of claim 11, wherein a limit is placed on a length of the daisy chain by adding a shadow random access memory (RAM) stub hook, wherein a final jump address in the chain points to a patch in RAM.

13. The method of claim 12, wherein an initialization of the RAM is carried out by a patch copy function of the OTP memory that runs once during initialization of the RAM.

14. The method of claim 13, wherein the patch copy function has itself daisy chain patch references wherein the patch copy function in OTP may include one or more hook headers to allow the area of programmed OTP copied into RAM to be changed by applying a patch to the patch copy function itself.

15. The method of claim 1, wherein the patching of the existing hook comprises:
- adding a number to the current program counter value, which will already be loaded with a next instruction address, and storing the result in a register; and
- storing the contents of the memory location pointed to by said register into the program counter by an indirect load, wherein the program counter is loaded with a value that is equivalent to a jump to an address contained in said memory location.

16. The method of claim 1, wherein said patching of the existing hook comprises changing one or more bits of the existing jump instruction to create a new jump address, and so leaving the unprogrammed locations of the hook untouched for future use.

17. The method of claim 1, wherein said patching of the existing hook is always possible by changing one or more bits of the existing jump instruction to create a new jump address, meaning that reserving space for additional unprogrammed locations in the hook is not necessary.

18. The method of claim 1, said programming a new subroutine can be reversed by branching back from a hook of the new subroutine to a body of an original subroutine.

19. The method of claim 1, wherein an additional subroutine can be inserted into a flow of subroutines by programming said additional subroutine in the unprogrammed OTP memory area and by patching the hook header of an original subroutine to jump to the additional subroutine, then by branching back from a hook of the additional subroutine to a body of said original subroutine.

20. The method of claim 1, wherein a first patch subroutine may make a call to a second subroutine that has not yet been patched, wherein a subsequent patch may be applied in the hook of the second subroutine without the need to make further patches to the calling first subroutine.

21. The method of claim 1, wherein the patching is carried out by changing the one or more jump instructions into some other 'benign' one or more instructions, followed by a jump to a different subroutine address, wherein benign instructions are defined as any instruction that does not modify the state of the processor, including register and flag values and wherein program execution continues with a next instruction after the one or more benign instructions.
